Europäisches Patentamt

European Patent Office

Office européen des brevets

(19)

(11) Veröffentlichungsnummer: **0 179 934**
**B1**

(12) **EUROPÄISCHE PATENTSCHRIFT**

(45) Veröffentlichungstag der Patentschrift:
27.04.88

(21) Anmeldenummer: **84113055.2**

(22) Anmeldetag: **31.10.84**

(51) Int. Cl.⁴: **G 11 B 5/708,** G 11 B 5/704,
G 11 B 5/855

(54) **Magnetplatte und Verfahren zu ihrer Herstellung.**

(43) Veröffentlichungstag der Anmeldung:
07.05.86 Patentblatt 86/19

(45) Bekanntmachung des Hinweises auf die Patenterteilung:
27.04.88 Patentblatt 88/17

(84) Benannte Vertragsstaaten:
DE FR GB

(56) Entgegenhaltungen:
FR-A-2 096 031
US-A-4 393 110

IBM TECHNICAL DISCLOSURE BULLETIN, Band 25,
Nr. 11B, April 1983, Seiten 6114-6115, New York, US;
W.E. MUTTER: "Selective filling of isolation
trenches in silicon"
EXTENDED ABSTRACTS, Band 83, Nr. 2, 1983,
Seiten 490-491, Nr. 311, Pennington, N.J., US; W.
LARSON u.a.: "Groove refill isolation for
submicrometer devices"
PATENTS ABSTRACTS OF JAPAN, Band 5, Nr. 196
(P-93) 868 , 12. Dezember 1981

(73) Patentinhaber: **IBM DEUTSCHLAND GMBH,**
**Pascalstrasse 100, D-7000 Stuttgart 80 (DE)**
(84) Benannte Vertragsstaaten: **DE**

(73) Patentinhaber: **International Business Machines**
**Corporation, Old Orchard Road, Armonk, N.Y.**
**10504 (US)**
(84) Benannte Vertragsstaaten: **FR GB**

(72) Erfinder: **Briska, Marian, Goethestrasse 2, D-7407**
**Rottenburg- 16 (DE)**
Erfinder: **Elsner, Gerhard, Dr., Feldbergstrasse 67,**
**D-7032 Sindelfingen (DE)**
Erfinder: **Hinkel, Holger, Dr., Zeisigweg 13, D-7030**
**Böblingen (DE)**

(74) Vertreter: **Oechssler, Dietrich, Dr. rer. nat., IBM**
**Deutschland GmbH Patentwesen und**
**Urheberrecht Schönaicher Strasse 220, D-7030**
**Böblingen (DE)**

## Beschreibung

Die Erfindung betrifft eine Magnetplatte, welche ein Siliciumsubstrat und eine auf dem Substrat aufgebrachte, aus einem Bindemittel, magnetischen Teilchen und einem abriebfesten Material bestehende Magnetschicht aufweist, und ein Verfahren zum Herstellen einer solchen Magnetplatte, bei dem ein Substrat bereitgestellt wird und darauf eine mindestens ein Bindemittel und magnetische Teilchen enthaltende Schicht aufgebracht wird.

Derzeit eingesetzte Magnetplatten hoher Leistung weisen Substrate, bevorzugt aus Aluminium, Aluminium-Magnesium oder Silicium, und eine darauf aufgebrachte - bevorzugt ungefähr 1 μm dicke - Magnetschicht auf, welche ein mit magnetischen Partikeln gefülltes Harz enthält. Damit die Magnetplatte der Einwirkung des harten Magnetkopfes aus keramischem Material widerstehen kann, der in der Start/Stop-Phase auf der Platte schleift, ist das Harz zusätzlich mit Aluminiumoxidpartikeln, welche ungefähr 2 Vol.-% der Beschichtung ausmachen, gefüllt. Tatsächlich schleift daher der Magnetkopf nicht direkt auf dem Harz, sondern auf den Aluminiumoxidpartikeln, welche als Stützpunkte dienen. Im Prinzip würde eine solche Beschichtung allen Anforderungen genügen, wenn die Haftung der Aluminiumoxidpartikel in der Harzmatrix sehr gut wäre. Dies ist jedoch keineswegs der Fall; vielmehr wird im Betrieb der Platte häufig ein Ausbrechen von Aluminiumoxidpartikeln beobachtet. Dieses Ausbrechen führt dazu, daß die Platte dort, wo ein Aluminiumoxidpartikel herausgeschlagen worden ist, erhöhtem Abrieb unterliegt und daß die dann auf der Plattenoberfläche liegenden harten Aluminiumoxidpartikel zu einer Abnutzung der Plattenoberfläche und des Magnetkopfes beitragen und schließlich zu einem vorzeitigen Ausfall des aus Magnetplatte und Magnetkopf bestehenden Systems führt. Dieses Problem tritt bereits bei Funktionstests nach Abschluß der Plattenfertigung oder dann, wenn die Platte beim Kunden eingesetzt wird, auf und hat deshalb bisher schwerwiegende Einbrüche in der Fertigung und einen hohen Wartungsaufwand verursacht.

Es ist deshalb die Aufgabe der Erfindung, eine Magnetplatte, welche eine aus einem Bindemittel, magnetischen Partikeln und einem abriebfesten Material bestehende Magnetschicht auf einem Substrat aufweist und bei welcher das abriebfeste Material auch dann, wenn der Magnetkopf über die Platte schleift, fest verankert bleibt und ein Verfahren anzugeben, mit dem eine solche Magnetplatte reproduzierbar, unter Einhaltung enger Toleranzen, in einer fabrikmäßigen Fertigung möglichst kostengünstig hergestellt werden kann.

Diese Aufgabe wird mit einer Magnetplatte der eingangs genannten Art mit den Merkmalen des kennzeichnenden Teils des Patentanspruchs 1 und mit einem Verfahren der eingangs genannten Art mit den Merkmalen des kennzeichnenden Teils des Patentanspruchs 9 gelöst.

Indem die Erhebungen entweder direkt aus dem Substrat oder aus einer fest auf dem Substrat haftenden Schicht herauswachsen und deswegen optimal verankert sind, wird erreicht, daß durch die Magnetköpfe kein abriebfestes Material aus der Magnetschicht herausgeschlagen wird, wodurch verhindert wird, daß Partikel aus dem abriebfesten Material sich auf der Magnetplattenoberfläche ansammeln und daß die Magnetschicht vermehrtem Abrieb unterworfen wird. Es kommt hinzu, daß - anders als bei den bekannten Magnetplatten die Erhebungen dem Magnetkopf, da sie abgerundete Spitzen oder zur Plattenoberfläche parallele Oberflächen haben, keine Angriffsfläche bieten. Zwar erscheint die Anzahl der Erhebungen, welche größenordnungsmäßig bei $10^4$ bis $10^6/cm^2$ liegt, groß, es ist aber so, daß wegen des absolut gesehen kleinen Querschnitts der Erhebungen nur ein geringer Teil der Substratoberfläche Erhebungen aufweist, während der größere Teil glatt ist, so daß keinerlei Störungen der Ebenheit der Magnetschicht zu erwarten sind. Insbesondere dann, wenn die Erhebungen aus Silicium bestehen, aber auch dann, wenn sie - was ohne weiteres möglich ist - aus einem Oxid, wie z. B. Aluminiumoxid, bestehen, haben sie mindestens dieselbe Härte, wie die in den bisherigen Magnetplatten verwendeten Aluminiumoxidpartikel. Das Siliciumsubstrat muß der Magnetplatte nicht notwendigerweise auch ihre mechanische Stabilität geben, d. h. entsprechend dick sein, vielmehr kann das Siliciumsubstrat auch in der Form einer dünnen, beispielsweise durch Kathodenzerstäubung aufgebrachten Schicht auf einem Substrat, beispielsweise aus Aluminium oder einer Aluminiumlegierung, wie z. B. Aluminiummagnesium, vorliegen.

Besteht das Siliciumsubstrat aus einem einkristallinen Siliciumplättchen, so werden in vorteilhafter Weise die Erhebungen in der Form von Pyramiden ausgebildet, welche aus Silicium bestehen, welches $5 \times 10^{18}$ Aluminiumatome/$cm^3$ enthält.

Bei einer vorteilhaften Ausgestaltung der erfindungsgemäßen Magnetplatte ragen aus dem Siliciumsubstrat zackenförmige, oben abgeschliffene Erhebungen aus Aluminiumoxid heraus, und das Siliciumsubstrat ist im übrigen mit einer Schicht aus Aluminiumoxid abgedeckt, auf welchem das in der magnetischen Schicht enthaltene Bindemittel sehr gut haftet.

Das erfindungsgemäße Verfahren verwendet zum Teil bekannte und zum Beispiel in der Halbleitertechnik angewandte Verfahrensschritte und Vorrichtungen, wodurch die Aufwendungen reduziert werden können. Andererseits legte die Anwendung dieser Verfahrensschritte und Vorrichtungen ihre Verwendung bei der Lösung der in der vorliegenden Anmeldung gestellten Aufgabe nicht nahe, denn erst durch die neuartige Kombination der zum Teil bekannten Verfahrensschritte wurden die überraschend günstigen Ergebnisse mit dem erfindungsgemäßen Verfahren erzielt.

Es ist vorteilhaft, wenn bei dem erfindungsgemäßen Verfahren das Siliciumsubstrat oberflächlich mit Bor dotiert und mit einer dünnen Aluminiumschicht bedeckt wird und daraufhin bei ungefähr 350°C getempert wird, wobei Aluminiumzacken auf dem Substrat aufwachsen, wenn die Aluminiumzacken und die Aluminiumschicht unter Bildung von Aluminiumoxidzacken und einer Aluminiumoxidschicht anodisch oxidiert werden, und wenn nach dem Bilden der Schicht aus Bindemittel und magnetischen Teilchen abgeschliffen wird, bis die Spitzen der Zacken freiliegen. Die Bordotierung schafft die Voraussetzung, daß sich die Aluminiumzacken bilden und daß sie regelmäßig verteilt sind. Die Stärke der Dotierung bestimmt die Flächendichte der Aluminiumzacken.

Bei einer anderen vorteilhaften Ausgestaltung des erfindungsgemäßen Verfahrens wird das Siliciumsubstrat unter Bildung einer dünnen Oberflächenschicht mit festgelegter Dicke arsendotiert, auf die Oberflächenschicht eine Schicht aus einem isolierenden Material aufgebracht, eine festgelegte Anzahl von Schwerionen in die Schicht implantiert, anschließend die Schicht im Bereich der Schwerionenspuren selektiv weggeätzt, durch die entstandenen Löcher hindurch die arsendotierte Oberflächenschicht selektiv bordotiert und die Schicht aus dem isolierenden Material und das dann noch vorhandene arsendotierte Material weggeätzt.

Bei einer dritten vorteilhaften Ausführungsform des erfindungsgemäßen Verfahrens wird das einkristalline Siliciumsubstrat mit siliciumhaltigem Aluminium oder nacheinander mit Aluminium und Silicium bedeckt, anschließend in einer Inertgasatmosphäre getempert und unter Bildung von Siliciumpyramiden abgekühlt, wobei die Anzahl der Siliciumpyramiden mit der richtigen Höhe über die Siliciummenge, die Siliciumverteilung in der aufgebrachten Schicht und die Temper- und Abkühldauer gesteuert wird, und schließlich werden durch Abätzen des Aluminiums die Siliciumpyramiden freigeätzt.

Bei allen genannten Ausführungsformen des erfindungsgemäßen Verfahrens wird die gewünschte Dichte und die regelmäßige Verteilung der Erhebungen in vorteilhafter Weise erreicht, ohne daß es erforderlich ist, zusätzliche Maskierungsschritte oder sonstige zusätzliche Schritte, welche die Selektivität der Bearbeitung gewährleisten, vorzusehen, vielmehr wird die richtige Dichte und Verteilung der Erhebungen durch eine entsprechende, durch einfache Versuche auffindbare Festlegung der Verfahrensparameter erzeugt. Dadurch wird das erfindungsgemäße Verfahren nicht nur sehr einfach, sondern erreicht dadurch auch eine beachtliche Reduzierung der Fehlermöglichkeiten und erlaubt es, die Fertigungstoleranzen enger zu machen, ohne daß dadurch die Reproduzierbarkeit des Verfahrens vermindert wird.

Andere vorteilhafte Ausgestaltungen der erfindungsgemäßen Magnetplatte und des erfindungsgemäßen Verfahrens ergeben sich aus den Unteransprüchen.

Die Erfindung wird anhand von durch Zeichnungen erläuterten Ausführungsbeispielen beschrieben. Es zeigen:

Fig. 1    in schematischer Querschnittsdarstellung einen Ausschnitt aus einer Ausführungsform der erfindungsgemäßen Struktur in verschiedenen Stadien der Herstellung gemäß einer Ausführungsform des erfindungsgemäßen Verfahrens,

Fign. 2 und 3    in schematischen Querschnittsdarstellungen bzw. perspektivischen Darstellungen einen Ausschnitt einer weiteren Ausführungsform der erfindungsgemäßen Struktur in verschiedenen Stadien der Herstellung gemäß zwei weiteren Ausführungsformen des erfindungsgemäßen Verfahrens und

Fig. 4    in schematischer Querschnittsdarstellung einen Ausschnitt aus einer dritten Ausführungsform der erfindungsgemäßen Struktur in verschiedenen Stadien der Herstellung gemäß einer vierten Ausführungsform des erfindungsgemäßen Verfahrens.

In der erfindungsgemäßen Magnetplatte hat das abriebfeste Material die Form von Erhebungen (3, 13, 23), welche über die Oberfläche des Siliciumsubstrats (1), auf welchem eine Schicht (5), welche ein Bindemittel und magnetische Teilchen enthält, aufgebracht ist, hinausragen, mit diesem verbunden sind und eine festgelegte Verteilung haben.

Hergestellt wird die Magnetplatte, indem auf dem Substrat (1) die Erhebungen (3, 13, 23) in einer festgelegten Verteilung durch Tempern aufgewachsen oder durch selektives, durch unterschiedliche Dotierung ermöglichtes Abätzen der Oberfläche des Substrats (1) erzeugt werden und dann ein Gemisch aus dem Bindemittel und den magnetischen Teilchen aufgebracht wird.

Im folgenden werden verschiedene Ausführungsformen der erfindungsgemäßen Magnetplatte und deren Herstellung mittels unterschiedlicher Varianten des erfindungsgemäßen Verfahrens im einzelnen erläutert.

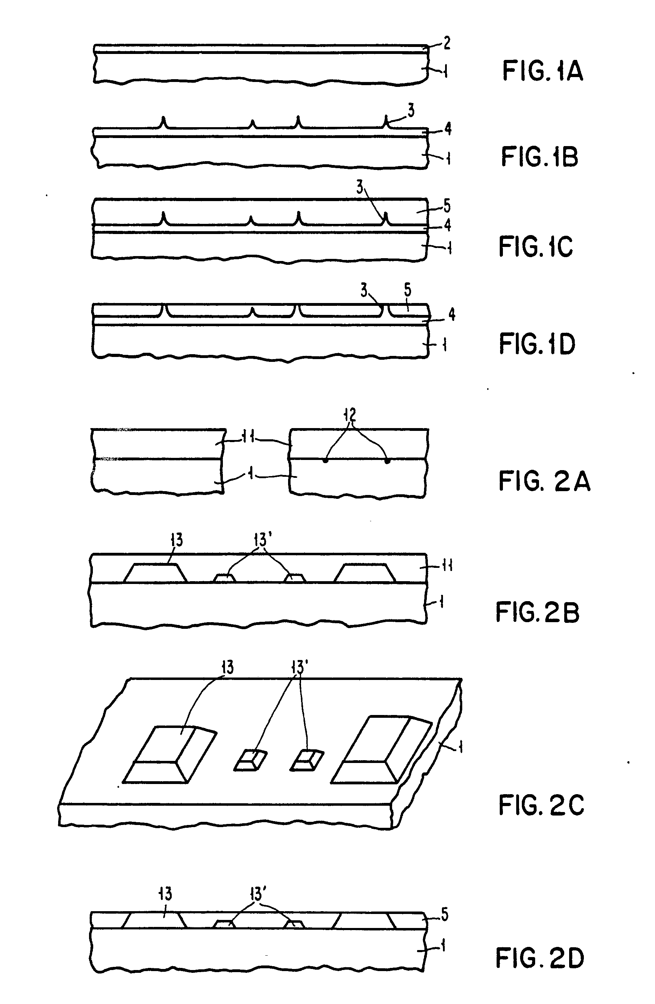

Die erste Ausführungsform der erfindungsgemäßen Magnetplatte und ihre Herstellung gemäß einer Ausführungsform des erfindungsgemäßen Verfahrens werden anhand der Fig. 1 beschrieben.

In dieser Ausführungsform der erfindungsgemäßen Magnetplatte ist das abriebfeste Material in Form von Zacken vorhanden, welche aus einem sehr harten Material bestehen und auf der Substratoberfläche aufgewachsen sind. Das Substrat 1 besteht aus Silicium. Es kann sich dabei um eine Siliciumplatte handeln oder auch um eine dünne Schicht, welche auf einer Unterlage, beispielsweise auf einer Scheibe aus Aluminium oder einer Aluminiumlegierung, wie Aluminium-Magnesium, bevorzugt durch Kathodenzerstäubung aufgebracht ist. Das Siliciumsubstrat 1 wird mittels Bor oberflächlich dotiert, so daß die Oberflächenkonzentration einen Wert zwischen $10^{18}$ und $10^{20}/cm^3$ hat. Anschließend wird auf das Siliciumsubstrat 1 eine zwischen 100 und 1000 nm dicke Aluminiumschicht 2 aufgebracht. Die Fig. 1A zeigt einen Ausschnitt der Struktur in diesem Stadium der Herstellung. Es folgt ein Temperschritt bei Temperaturen zwischen 350 und 400°C, wobei aus der Aluminiumschicht 2 die Aluminiumspitzen herauswachsen. Die Aluminiumspitzen sind regelmäßig über die Aluminiumschicht 2 verteilt. Ihre Dichte, welche bevorzugt in der Größenordnung von einer Spitze pro 100 μm² liegt, wird bestimmt durch die Bordotierung des Substrats 1. In dem angegebenen Bereich von $10^{18}$ bis $10^{20}$ Boratomen/cm³ variiert die Dichte der Aluminiumzacken auf dem Substrat um den Faktor 6. Die Temperzeit bestimmt die Höhe der Aluminiumzacken. Die angestrebte Höhe liegt zwischen ungefähr 1 und ungefähr 2 μm. Im nächsten Verfahrensschritt werden die Aluminiumschicht 2 und die Aluminiumzacken anodisch oxidiert, wobei das auf positivem Potential liegende Aluminium in einer beispielsweise aus einer Lösung von Ammoniumpentaborat in Äthylenglykol bestehenden Elektrolytlösung bei Spannungen bis etwa 20 Volt behandelt wird. Die Fig. 1B zeigt die nach der anodischen Oxidation vorliegende Struktur, wobei die aus Aluminiumoxid bestehenden Zacken mit dem Bezugszeichen 3 und die aus der Aluminiumschicht 2 erzeugte Aluminiumoxidschicht mit dem Bezugszeichen 4 bezeichnet sind. Auf die in der Fig. 1B gezeigte Struktur wird eine Schicht 5, welche ein Bindemittel und magnetische Teilchen enthält, aufgeschleudert und anschließend gehärtet. Das Bindemittel in der Schicht 5 besteht bevorzugt aus einem Epoxiharz und dabei typischerweise aus einem Epoxiharz vom Bisphenol A-Epichlorhydrin-Typ. Die magnetischen Teilchen bestehen bevorzugt aus $\gamma$-$Fe_2O_3$.

Die Schicht 5 wird so dick gemacht, daß sie die Aluminiumoxidzacken 3 mindestens weitgehend bedeckt. Die in diesem Stadium vorliegende Struktur zeigt die Fig. 1C. Im letzten Verfahrensschritt wird die Schicht 5 soweit abgeschliffen, daß die Spitzen der Aluminiumoxidzacken freigelegt und anpoliert werden. Einen Querschnitt durch einen Ausschnitt aus der fertigen Magnetplatte, welche auf diese Weise hergestellt worden ist, zeigt die Fig. 1D.

Bei dem angewandten Verfahren ist insbesondere vorteilhaft, daß mittels des unkritischen Schritts der Bordotierung erreicht werden kann, daß die Aluminiumzacken sowohl gleichmäßig verteilt sind, als auch - in Abhängigkeit von der Stärke der Dotierung die richtige Flächendichte haben. Das Verfahren ist weiter dadurch vorteilhaft, daß - ohne daß auf irgendeine der günstigen Eigenschaften verzichtet werden muß - die magnetische Schicht auf sehr unterschiedlichen Unterlagen aufgebracht werden kann. In der in der Fig. 1D gezeigten Ausführungsform der erfindungsgemäßen Magnetplatte besteht der abriebfeste Bestandteil aus demselben Material wie bei den bekannten Platten, jedoch ist er wesentlich fester verankert als bei den bekannten Platten. Durch die spezielle Art der Herstellung muß bei dem abriebfesten Material keine Einbuße bei der Härte in Kauf genommen werden, vielmehr haben die Aluminiumoxidzacken Mohs-Härten von bis zu 9.

Zur Herstellung einer weiteren Ausführungsform der erfindungsgemäßen Magnetplatte wird auf ein einkristallines Siliciumsubstrat eine aus Aluminium und Silicium bestehende Schicht bzw. eine aus Aluminium und eine aus Silicium bestehende Schicht aufgebracht, anschließend getempert und dann wieder abgekühlt, wobei sich Silicium (gesättigt mit $5 \times 10^{18}$ Aluminiumatomen/cm³) in Form kleiner Pyramiden auf der Substratoberfläche epitaktisch abscheidet. Nach dem Abätzen des Aluminiums wird ein Gemisch aus dem Bindemittel und den magnetischen Teilchen als Schicht aufgebracht, dann gehärtet und schließlich abgeschliffen, bis die obere Oberfläche der Pyramiden freigelegt ist. Die Abscheidung des Siliciums findet nicht ganzflächig statt, sondern nur an aktiven Zentren des Siliciumkristalls, da diese Zentren eine hohe Kristallkeimbildungstendenz aufweisen. Die Dichte der aktiven Zentren und somit die Flächendichte der Pyramiden läßt sich in einfacher Weise steuern, ohne daß es notwendig ist, das Substrat mittels selektiv einwirkenden Verfahrensschritten, beispielsweise unter Zuhilfenahme einer Maske, zu bearbeiten. Die Steuerung der Flächendichte erfolgt vielmehr über eine Beeinflussung der Siliciumverteilung in dem auf das Substrat aufgebrachte Material. Der Erläuterung der Zentrenbildung sollen zunächst einige allgemeine Bemerkungen vorangestellt werden.

Bei einer Temperatur von ungefähr 450°C liegt die Sättigungskonzentration von Silicium in festem Aluminium bei 1,2 Gew.-%. Bei 577°C ist die Sättigungskonzentration von Silicium in Aluminium nur um ungefähr 0,4 Gew.-% höher, d. h. sie liegt bei 1,6 Gew.-%. Bei 577° C liegt der eutektische Punkt des Systems AlSi. In der bei dieser Temperatur vorliegenden flüssigen Phase kann die Siliciumkonzentration bis auf 12 Gew.-% ansteigen. Wird nach dem Tempern das mit Silicium gesättigte Aluminium abgekühlt, so findet eine Ausscheidung des Siliciums statt. Beim Vorhandensein von aktiven Zentren auf der Substratoberfläche scheidet sich bei langsamem Abkühlen das Silicium bevorzugt an diesen aktiven Zentren epitaktisch ab. Mit zunehmender Abkühlungsgeschwindigkeit bleibt zunehmend mehr Silicium in Form kleiner Kristallite, welche aus einer intermetallischen Verbindung bestehen, im Aluminium. Wird Aluminium, welches an Siliciumbereiche grenzt, auf eine Temperatur erhitzt, bei welchem sein Siliciumgehalt wenigstens bereichsweise unterhalb der Sättigungskonzentration liegt, so ist es sein Bestreben, durch Anlösen der angrenzenden Siliciumbereiche den Siliciumgehalt bis auf die Sättigungskonzentration zu steigern. Dort, wo Silicium aus dem einkristallinen Siliciumsubstrat herausgelöst wird, entstehen aktive Zentren. Die Verteilung dieser Zentren über die Substratoberfläche ist statistisch (homogen); ihre Anzahl richtet sich danach, wie stark in dem an das Siliciumsubstrat angrenzenden Aluminium die Siliciumkonzentration unter der Sättigungskonzentration liegt. Man kann also die Anzahl der aktiven Zentren beeinflussen durch die Zusammensetzung und den Aufbau des auf dem Substrat aufgebrachten Materials. Die meisten aktiven Zentren werden entstehen, wenn das aufgebrachte Material aus reinem Aluminium besteht. (Allerdings steht in diesem Fall dann wenig Silicium zum Aufwachsen von Pyramiden zur Verfügung.) Wird zunächst eine Schicht aus Aluminium und darüber eine Siliciumschicht, mit genügend Silicium um das Aluminium zu sättigen, aufgebracht, so wird beim Tempern auch eine sehr große Anzahl von aktiven Zentren gebildet werden. Wird hingegen das Aluminium und das Silicium gleichzeitig in einem solchen Verhältnis aufgebracht, daß bei der Tempertemperatur das Aluminium an Silicium gesättigt ist, so werden sehr wenige aktive Zentren entstehen. Eine Anzahl von aktiven Zentren, welche zwischen diesen beiden Extremfällen liegt, wird erhalten, wenn man zunächst eine Aluminiumschicht, deren Dicke ungefähr der Hälfte der Aluminiumschichtdicke entspricht, aufbringt, anschließend eine Siliciumschicht, mit genügend Silicium, um das gesamte Aluminium, welches aufgebracht werden soll, zu sättigen und schließlich die zweite Hälfte der Aluminiumschichtdicke aufbringt. Man kann also durch entsprechende Steuerung des Aufbringens von Aluminium und Silicium auf das Siliciumsubstrat die Anzahl der aktiven Zentren und damit der aufwachsenden Siliciumpyramiden so steuern, daß die angestrebte Pyramidenflächendichte von 100 bis 10 000 pro cm$^2$ verwirklicht wird. Die genauen Parameter, mit welchen das Aluminium und das Silicium aufgebracht werden müssen, lassen sich durch einfache Versuche festlegen.

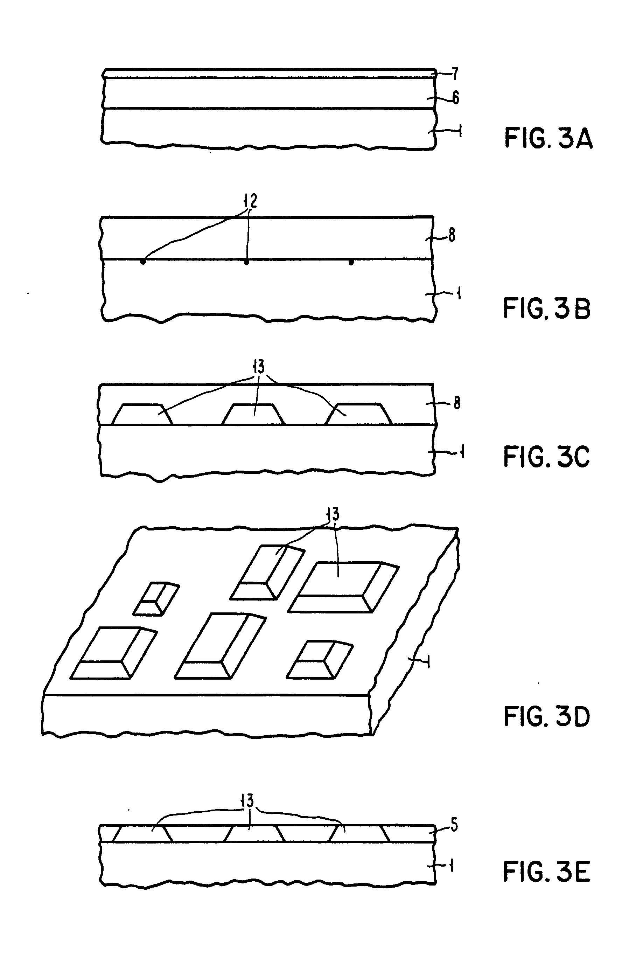

Anhand der Fign. 2 und 3 soll nun für die beiden oben genannten Extremfälle die Erzeugung der Siliciumpyramiden auf dem Siliciumsubstrat und die sich daran anschließende Herstellung der Magnetplatte besprochen werden.

Auf ein Siliciumsubstrat 1, welches bevorzugt eine (100)-Orientierung hat, wird eine Schicht 11 aufgedampft, welche aus Aluminium und ungefähr 1,2 Gew.-% Silicium, bezogen auf die Gesamtmenge des aufgebrachten Materials, besteht. Einen Ausschnitt aus der dann vorliegenden Struktur zeigt die Fig. 2A. Anschließend wird bei einer Temperatur zwischen 400 und 480° C in einer Inertgasatmosphäre getempert. Dabei bilden sich, wie die Fig. 2B zeigt, relativ wenige aktive Zentren 12. Beim langsamen Abkühlen (~ 5° C/min) wachsen dann auf dem Siliciumsubstrat 1 an den Stellen, wo sich die aktiven Zentren 12 gebildet haben, epitaktisch relativ große Pyramiden 13 auf. Es ist außerdem möglich, daß neben den Pyramiden 13 noch weitere, jedoch wesentlich niedrigere Pyramiden 13' aufwachsen. Die dann vorliegende Struktur zeigt die Fig. 2C. Im nächsten Verfahrensschritt wird die Schicht 11 bevorzugt mittels eines mit Salpetersäure, Salzsäure und Phosphorsäure enthaltenden Säuregemischs abgelöst und dadurch die Oberfläche des Substrats 1 und die Pyramiden 13 und 13' freigelegt. Einen Ausschnitt aus der dann vorliegenden Struktur zeigt die Fig. 2D in einer perspektivischen Darstellung. Wiederum in perspektivischer Querschnittsdarstellung zeigt die Fig. 2E einen Ausschnitt aus der Magnetplatte, nachdem eine Schicht 5, welche ein Bindemittel, und zwar bevorzugt ein Epoxidharz und magnetische Teilchen, wie z. B. $\gamma$-Fe$_2$O$_3$, aufgebracht, dann gehärtet und schließlich abgeschliffen, bis die Oberflächen der Schicht 5 und der Siliciumpyramiden coplanar sind. Die in der Fig. 2E gezeigte Magnetplatte verkörpert den einen Extremfall, in welchem die Anzahl der Siliciumpyramiden relativ klein ist. Der andere Extremfall soll anhand der Fig. 3 erläutert werden.

Fig. 3A zeigt einen Ausschnitt aus einer Struktur, bei welcher auf ein Siliciumsubstrat 1 eine Aluminiumschicht 6 und auf dieser eine dünne Siliciumschicht 7 aufgebracht sind. Das Dickenverhältnis der Schichten 6 und 7 ist ungefähr so gewählt, daß die Siliciumgewichtsmenge in der Schicht 7 ungefähr 1,2 % der Gesamtgewichtsmenge von Aluminium und Silicium beträgt. Die dann vorliegende Struktur wird auf eine Temperatur zwischen 400 und 480° C erhitzt und getempert. Dabei diffundiert das Silicium aus der Schicht 7 in die Aluminiumschicht 6 unter Bildung einer Aluminium und Silicium enthaltenden Schicht 8. Da zu Beginn des Tempervorgangs das Aluminium an der Grenzfläche zum Siliciumsubstrat 1 kein Silicium enthält, wird Silicium aus dem Siliciumsubstrat 1 begierig von dem Aluminium gelöst, wodurch eine große Anzahl von aktiven Zentren 12 entsteht. Das Ergebnis des Temperns zeigt die Fig. 3B in schematischer Querschnittsdarstellung. Läßt man die Struktur anschließend langsam abkühlen (~ 5°C/min), so scheidet sich an den aktiven Zentren 12 epitaktisch Silicium aus der Schicht 8 unter Bildung von kleinen Siliciumpyramiden 13 ab (siehe Fig. 3C). Die Höhe der Siliciumpyramiden 13 hängt abgesehen von der Anzahl der aktiven Zentren und der Temper- und Abkühldauer von der absoluten Siliciummenge in der Schicht 8 ab. Da die maximal lösliche Menge (Sättigungskonzentration im festen Aluminium) unabhängig von der Tempertemperatur eine obere Grenze von 1,6 % hat, kann die verfügbare Siliciummenge nur über die Dicken, mit welchen die Schichten 6 und 7 aufgebracht werden, beeinflußt werden.

Die Fig. 3D zeigt in einer schematischen perspektivischen Darstellung einen Ausschnitt aus der Struktur, welche vorliegt, wenn die Schicht 8, beispielsweise mit dem oben genannten Säuregemisch, abgelöst worden ist. Anschließend wird auf die Substratoberfläche eine Schicht 5, bestehend aus dem Bindemittel, bei welchem es sich bevorzugt um ein Epoxidharz handelt, und magnetischen Teilchen, wie z. B. $\gamma$-$Fe_2O_3$, aufgeschleudert. Dabei sind die sanft ansteigenden Flanken der Pyramiden 13 besonders vorteilhaft, da sie die Strömung des Harzes beim Aufschleudern besonders wenig beeinflussen. Die Schicht 5 wird dann gehärtet und abgeschliffen, bis die Oberfläche der Schicht 5 mit der Oberfläche der Siliciumpyramiden 13 coplanar ist. Die damit fertige Magnetplatte zeigt die Fig. 3E in schematischer Querschnittsdarstellung.

Bei den Fign. 2E und 3E sind die Siliciumpyramiden 13 praktisch Teil des Substrats 1; eine bessere Verankerung des abriebfesten Materials läßt sich überhaupt nicht erreichen. Die Härte der Pyramiden 13 ist beachtlich, sie kann im Bedarfsfall noch erhöht werden, indem das Silicium oberflächlich in $Si_3N_4$ umgewandelt wird. Ebenso wie bei der in der Fig. 1D gezeigten Struktur ist das Siliciumsubstrat abgesehen von den Erhebungen, d. h. im Fall der Fign. 2E und 3E die Siliciumpyramiden 13, glatt, so daß keinerlei Störungen für die Magnetschicht zu erwarten sind.

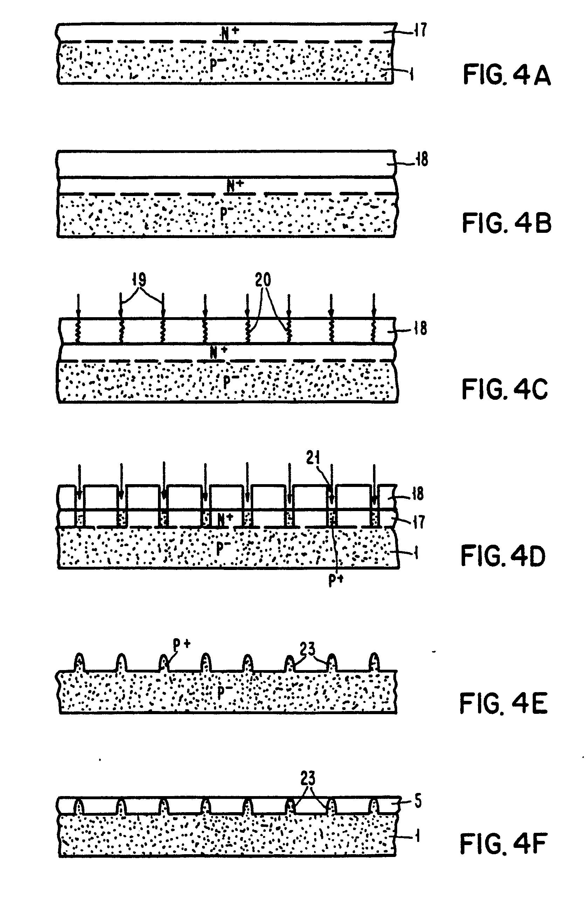

Anhand der Fig. 4 soll nun eine weitere Ausführungsform der erfindungsgemäßen Magnetplatte besprochen werden, welche mit den oben besprochenen Ausführungformen große Ähnlichkeit hat, die jedoch mit einem Verfahren hergestellt wird, welches sich von den oben beschriebenen beachtlich unterscheidet.

Ausgegangen wird von einem schwach bordotierten Siliciumsubstrat 1. Bei dem Siliciumsubstrat 1 kann es sich um eine Siliciumplatte handeln oder auch um eine Siliciumschicht, welche beispielsweise mittels Kathodenzerstäubung auf eine Unterlage, welche bevorzugt aus Aluminium oder einer Aluminiumlegierung, wie z. B. Aluminiummagnesium, besteht, aufgebracht wird. Das Siliciumsubstrat 1 wird ganzflächig mit einer Arsendotierung versehen, welche so hoch ist, daß sie in einer Tiefe von ungefähr 1 µm $10^{17}$ Arsenatome/$cm^3$ beträgt. Die Dotierung kann durch Diffusion oder Ionenimplantation erfolgen. Die dann vorliegende Struktur, bei welcher der Einfachheit halber nur eine Oberfläche mit Arsen dotiert worden ist, zeigt ausschnittsweise in schematischer Querschnittsdarstellung die Fig. 4A, in welcher die arsendotierte Schicht mit dem Bezugszeichen 17 bezeichnet ist. Auf die Schicht 17 wird eine Schicht 18 aus einem isolierenden Material, welches bevorzugt ein Polyimid ist, welches wegen seiner gut reproduzierbaren Ätzbarkeit in alkalischen Medien gunstig ist, aufgebracht. Die Schicht 18 wird 2 bis 3 µm dick gemacht.

Die dann vorliegende Struktur zeigt die Fig. 4B. Die Schicht 18 wird mit hochenergetischen Schwerionen 19 mit einer Energie von 5 bis 20 MeV beschossen. Dabei werden in der Schicht 18 latente Spuren 20 erzeugt, längs derer eine lokale Erhöhung der Ätzgeschwindigkeit erfolgt. Diese lokale Erhöhung der Ätzgeschwindigkeit tritt nur bei isolierenden Materialien auf. Es handelt sich dabei um einen anderen Schädigungsmechanismus als bei der konventionellen Ionenimplantation. In dem darunterliegenden Silicium wird keine Schädigung erzeugt. Um in einem späteren Verfahrens schritt die gewünschte Dichte von Erhebungen auf dem Siliciumsubstrat zu erhalten, werden größenordnungsmäßig $10^5$ $Xe^+$-Ionen/$cm^2$ in die Schicht 18 eingeschossen. Es ist dabei nicht erforderlich, Maßnahmen, beispielsweise die Bereitstellung einer Maske, vorzusehen, um eine gleichmäßige Verteilung der Spuren 20 über die Schicht 18 zu erreichen. Vielmehr wird der $Xe^+$-Ionenstrahl so über die Schicht 18 geführt, daß jeder Bereich gleich lange dem Ionenstrahl ausgesetzt ist. Mit diesem Verfahren wird eine gleichmäßige Verteilung der Spuren 20 über die Schicht 18 erzielt. Die Fig. 4C zeigt die Struktur nach dem Bestrahlen.

Im nächsten Verfahrensschritt wird die Schicht 18 selektiv im Bereich der Spuren 20 geätzt. Besteht die Schicht 18 aus einem Polyimid, so wird bevorzugt mit einer 1 bis 2 molaren KOH-Lösung geätzt. Die Ätzung ist sehr gut reproduzierbar, und es entstehen dabei durchgehende Kanäle 21, deren Durchmesser je nach den gewählten Ätzbedingungen zwischen 0,5 und 1 µm liegt. Die nun vorliegende Struktur zeigt die Fig. 4D. Nun werden ganzflächig ca. $10^{16}$ Boratome/$cm^2$ mit einer Energie von 130 KeV in die arsendotierte Schicht 17 implantiert, wobei die Kanäle 21 aufweisende Schicht 18 als Implantationsmaske dient. Die nach der Implantation vorliegende Struktur zeigt im Querschnitt die Fig. 4D. Nach der Ionenimplantation wird die Schicht 18 vollständig entfernt. Anschließend werden mittels eines Hochtemperatur-Temperschritts an den Stellen, in welche Borionen implantiert worden sind, durch eine Umverteilung der Borionen Gebiete mit einer P+-Dotierung erzeugt. Ist das Siliciumsubstrat auf einer aus Aluminium oder Aluminium-Magnesium bestehenden Unterlage aufgebracht, wird, da eine Hochtemperatur-Temperung zur Borumverteilung dann nicht möglich ist, die Borimplantation mit im Bereich zwischen 20 und 260 KeV kontinuierlich sich ändernder Energie durchgeführt. Das Plattensubstrat wird dann in einer heißen Lösung, welche auf 10 Teile Äthylendiamin ein Teil Pyrokatechol enthält, geätzt, wobei die N+-Gebiete vollständig entfernt werden. Die P+-dotierten Gebiete bleiben stehen und bilden eine Matrix von gleichmäßig auf dem Substrat verteilten Erhebungen 23. Die Erhebungen 23 werden bei dem Naßätzen soweit angegriffen, daß sie abgerundete Kanten aufweisen, was ihre Abriebfestigkeit in der fertigen Magnetplatte erhöht und auch für das Fließverhalten des die magnetischen Teilchen enthaltenden Gemischs bei der anschließenden Beschichtung mittels Aufschleuderns von Vorteil ist. Nach dem Aufschleudern der bevorzugt aus einem Epoxidharz und $\gamma$-Fe$_2$O$_3$ bestehenden Schicht 5, ihrer Aushärtung und ihres Abtragens, bis ihre Oberfläche mit den Spitzen der Erhebungen 23 coplanar ist, liegt die fertige Magnetplatte vor. Ein Ausschnitt aus dieser Magnetplatte ist in der Fig. 4F gezeigt.

Das zuletzt beschriebene Verfahren ist insbesondere deshalb vorteilhaft, weil bei seiner Anwendung das Substrat als dünne auf einer Unterlage aus einem anderen Material aufgebrachte Siliciumschicht vorliegen kann, weil die Siliciumerhebungen alle exakt mit, derselben Höhe erzeugt werden, so daß ein Überschleifen zum Ausgleichen von Höhenunterschieden nicht nötig ist und weil auf sehr einfache Weise eine homogene Verteilung der Siliciumerhebungen 23 auf dem Substrat erreicht wird. Die erzeugte, in der Fig. 4F dargestellte Magnetplatte wird vor allem deshalb als sehr vorteilhaft angesehen, weil das abriebfeste Material, d. h. die Erhebungen 23, optimal stark im Siliciumsubstrat verankert sind und die rundgeätzten Ecken der Erhebungen 23 verhindern, daß der Magnetkopf, wenn er in der Start/Stop-Phase auf der Platte schleift, beschädigt wird.

Im folgenden werden die oben beschriebenen Ausführungsformen des erfindungsgemäßen Verfahrens und die damit hergestellte Magnetplatte an fünf speziellen Beispielen noch einmal detailliert dargestellt.

**Beispiel 1**

In diesem Beispiel wird die Herstellung einer Magnetplatte, wie sie in der Fig. 1D dargestellt ist, beschrieben. Eine Siliciumplatte wird mit Bor dotiert, so daß die Oberflächenkonzentration bei ungefähr $10^{19}$ Boratome/cm$^3$ liegt. Anschließend wird die Siliciumplatte mit einem Aluminiumfilm, welcher ungefähr 500 nm dick ist, bedampft. Die bedampfte Siliciumplatte wird bei ca. 350° C ca. 20 Minuten lang getempert, wobei Aluminiumzacken, welche ungefähr 1 μm hoch sind, aufwachsen. Der Aluminiumfilm und die Aluminiumzacken werden anodisch oxidiert. Die anodische Oxidation erfolgt in einem Bad, welches aus einer Lösung von Ammoniumpentaborat in Äthylenglykol (17 g Ammoniumpentaborat pro 100 ml Äthylenglykol) besteht. Es wird eine Spannung angelegt, die während der Oxidation, bei welcher die Struktur an dem positiven Potential liegt, kontinuierlich von 5 auf 20 Volt ansteigt. Auf das Substrat wird nunmehr ein Gemisch aus einem Epoxidharz auf der Basis von Bisphenol A-Epichlorhydrin und $\gamma$-Fe$_2$O$_3$ aufgeschleudert. Anschließend wird die Beschichtung poliert und dabei teilweise entfernt, wobei die Aluminiumoxidzacken freigelegt und anpoliert werden.

Die Dichte der regelmäßig über die Magnetplattenoberfläche verteilten Aluminiumoxidzacken lag in der Größenordnung von 1 pro 100 μm$^2$. Es wurde festgestellt, daß die so hergestellte Magnetplatte hervorragende Abriebeigenschaften hatte, und es wurden auch nach längerem Gebrauch keine Partikel auf der Magnetplattenoberfläche festgestellt.

**Beispiel 2**

Im folgenden wird die Herstellung einer Magnetplatte, wie sie in der Fig. 2E in schematischer Querschnittsdarstellung gezeigt ist, beschrieben. Auf eine einkristalline Siliciumplatte mit (100)-Orientierung wurde eine ungefähr 1 μm dicke AlSi-Schicht, welche ungefähr 1,2 Gew.-% Silicium enthielt, aufgedampft. Anschließend wurde diese eine Stunde bei 450° C in Argon getempert und dann innerhalb von 10 Minuten abgekühlt. Die AlSi-Schicht wurde daraufhin mit einem Salpetersäure, Salzsäure und Phosphorsäure enthaltenden Säuregemisch weggeätzt. Beim Wegätzen des Aluminiums wurden relativ große Pyramiden aus Silicium, welche größenordnungsmäßig 1 μm hoch waren und sanft ansteigende Flanken aufwiesen, sichtbar. Auf das Substrat mit den Siliciumpyramiden wurde nun ein Gemisch, welches aus Epoxidharz auf der Basis von Bispenol A-Epichlorhydrin und $\gamma$-Fe$_2$O$_3$ bestand, aufgeschleudert, gehärtet und dann poliert, bis die obere Oberfläche der Siliciumpyramiden freigelegt war.

Bei der so hergestellten Magnetplatte waren die Siliciumpyramiden gleichmäßig über das Plattensubstrat verteilt. Auch bei längerem Gebrauch wurden auf der Plattenoberfläche keine Siliciumpartikel festgestellt. Trotzdem war die Abriebfestigkeit der Magnetplatte noch nicht optimal, was offenbar darauf zurückzuführen war, daß die Anzahl der Siliciumpyramiden nicht hoch genug war, so daß der Magnetkopf bei der Start/Stop-Phase nicht ständig Kontakt mit einer Siliciumpyramide hatte.

## Beispiel 3

In diesem Beispiel wird die Herstellung einer Magnetplatte, wie sie in schematischer Querschnittsdarstellung in der Fig. 3E dargestellt ist, beschrieben.

Das bei diesem Beispiel angewandte Verfahren unterscheidet sich nur dadurch von dem im Beispiel 2 angewandten Verfahren, daß nicht eine AlSi-Schicht, sondern zunächst eine ungefähr 0,85 μm dicke Aluminium- und dann eine 0,01 μm dicke Siliciumschicht aufgedampt wird. Beim Ablösen der Aluminium- und der Siliciumschicht wurde eine große Anzahl von kleinen, epitaktisch auf dem Siliciumsubstrat aufgewachsener Siliciumpyramiden freigelegt. In der bei diesem Beispiel hergestellten Magnetplatte war die Magnetschicht, nachdem sie soweit abpoliert worden war, daß die Spitzen der Siliciumpyramiden freigelegt waren, so dünn und die Anzahl der Siliciumpyramiden so groß, daß die hergestellte Platte nicht mehr den Spezifikationen entsprach. Allerdings war auch bei dieser Platte die Verteilung der Siliciumpyramiden homogen über das Plattensubstrat verteilt.

## Beispiel 4

Das bei diesem Beispiel angewandte Verfahren unterscheidet sich von den beiden vorangegangenen nur in der Art und Weise, wie das Aluminium und das Silicium aufgebracht wird. Es wurde nämlich zunächst eine 0,4 μm dicke Aluminiumschicht, dann eine 0,01 μm dicke Siliciumschicht und schießlich wiederum eine 0,45 μm dicke Aluminiumschicht auf das Siliciumsubstrat aufgebracht. Die bei diesem Beispiel hergestellte Magnetplatte entsprach in jeder Hinsicht den Anforderungen: Die Anzahl der erzeugten Siliciumpyramiden lag größenordnungsmäßig bei $10^5/cm^2$, die Pyramiden waren regelmäßig über das Magnetplattensubstrat verteilt, die Magnetschicht hatte, nachdem soweit abpoliert worden war, daß die Spitzen der Pyramiden freilagen, die richtige Höhe (ca. 1 μm), die Abriebfestigkeit der Magnetplatte war ausgezeichnet, und auch nach längerem Gebrauch wurden auf der Magnetplattenoberfläche keine Siliciumteilchen gefunden.

## Beispiel 5

In diesem Beispiel wird die Herstellung einer Magnetplatte, wie sie in schematischer Querschnittsdarstellung in der Fig. 4F dargestellt ist, beschrieben. Ein P⁻-dotiertes Siliciumplattensubstrat wurde ganz flächig mit einer Arsendotierung von $10^{19}$ Atomen/cm³ (Oberflächenkonzentration) versehen, wobei in 1 μm Tiefe die Arsenkonzentration bei $10^{17}$ Atomen/cm³ lag. Die Dotierung erfolgte einseitig durch Ionenimplantation. Die Oberfläche der arsendotierten Schicht wurde mit einer ungefähr 2,5 μm dicken Schicht aus Polyimid beschichtet. Die Polyimidschicht wurde mit Xenon-Ionen mit einer Dosis von $10^5$ Ionen/cm² und einer Energie von ungefähr 10 MeV beschossen. Anschließend wurde das Polyimid einer ungefähr 2 molaren KOH-Lösung ausgesetzt, wobei durchgehende Kanäle mit einem Durchmesser von ungefähr 0,5 bis ungefähr 1 μm geätzt wurden. Anschließend wurden in das Siliciumsubstrat Borionen mit einer Dosis von $10^{16}$ Atomen/cm² mit einer Energie von 130 keV implantiert, wobei die mit Kanälen versehene Polyimidschicht als Implantationsmaske diente. Im nächsten Verfahrensschritt wurde die Polyimidschicht durch weiteres Ätzen in der ungefähr 2 molaren KOH-Lösung vollständig entfernt. Es folgte ein Temperschritt bei 900°C zur Umverteilung des implantierten Bors. Das Siliciumplattensubstrat wurde nunmehr ganzflächig in einer heißen Äthylendiamin-Pyrokatechol-Lösung (10 Gewichtsteile Äthylendiamin auf 1 Teil Pyrokatechol) geätzt, wobei die arsendotierten Gebiete vollständig entfernt wurden. Die bei der Umverteilung, des implantierten Bors erzeugten P+-Gebiete blieben bis auf eine Abrundung der Kanten ungeätzt und bildeten eine Matrix von regelmäßig über das Siliciumplattensubstrat verteilten Erhebungen. Die Erhebungen hatten eine Höhe von ungefähr 1 μm und eine Dichte von ungefähr $10^5$ Erhebungen/cm². Auf das so ausgebildete Siliciumplattensubstrat wurde ein Gemisch aus Epoxidharz auf der Basis von Bispenol A-Epichlorhydrin und $\gamma$-Fe$_2$O$_3$ aufgeschleudert und dann abpoliert, bis die Schicht coplanar mit den oberen Oberflächen der Siliciumerhebungen war.

Die so hergestellte Platte hatte ausgezeichnete Abriebeigenschaften, eine völlig glatte Oberfläche, und auch nach längerem Gebrauch wurden auf der Magnetplattenoberfläche keine Siliciumpartikel gefunden.

## Patentansprüche

1. Magnetplatte, welche ein Siliciumsubstrat und eine auf dem Substrat aufgebrachte, aus einem Bindemittel, magnetischen Teilchen und einem abriebfesten Material bestehen Magnetschicht aufweist,
dadurch gekennzeichnet,

daß das abriebfeste Material die Form von Erhebungen (3, 13, 23) hat, welche über die Oberfläche des Substrats (1) hinausragen, entweder direkt aus dem Substrat oder aus einer fest auf dem Substrat haftenden Schicht herauswachsen und eine festgelegte, regelmäßige Verteilung haben.

2. Magnetplatte nach Anspruch 1,
dadurch gekennzeichnet,
daß die Erhebungen (3, 13, 23) eine Flächendichte von $3 \times 10^5$ bis $2 \times 10^6$ pro cm$^2$ haben.

3. Magnetplatte nach Anspruch 1 oder 2,
dadurch gekennzeichnet,
daß das Siliciumsubstrat (1) einkristallin ist und die Erhebungen (13) aus Silicium bestehen, welches $5 \times 10^{18}$ Aluminiumatome/cm$^3$ enthält, und Pyramidenform haben.

4. Magnetplatte nach Anspruch 1 oder 2,
dadurch gekennzeichnet,
daß das Siliciumsubstrat (1) auf einer Unterlage, z. B. aus Aluminium oder einer Aluminiumlegierung, aufliegt.

5. Magnetplatte nach einem der Ansprüche 1, 2 oder 4,
dadurch gekennzeichnet,
daß das Siliciumsubstrat (1) schwach und die aus Silicium bestehenden Erhebungen (23) stark bordotiert sind.

6. Magnetplatte nach einem der Ansprüche 1, 2 oder 4,
dadurch gekennzeichnet,
daß auf dem Siliciumsubstrat (1) zackenförmige Erhebungen (3) aus Aluminiumoxid ausgebildet sind und die Oberfläche des Substrats (1) im übrigen mit einer Schicht (4) aus Aluminiumoxid bedeckt ist.

7. Magnetplatte nach einem der Ansprüche 1 bis 6,
dadurch gekennzeichnet,
daß die Oberflächen der Erhebungen (3, 13, 23) etwa coplanar mit der Oberfläche der Magnetschicht sind.

8. Verfahren zum Herstellen einer Magnetplatte nach einem der Ansprüche 1 bis 7, bei dem ein Siliciumsubstrat bereitgestellt wird und darauf eine mindestens ein Bindemittel und magnetische Teilchen enthaltende Schicht aufgebracht wird,
dadurch gekennzeichnet,
daß vor dem Aufbringen der Schicht (5) auf dem Siliciumsubstrat (1) und den Erhebungen (3, 13, 23), die letzteren in festgelegter, regelmäßiger Verteilung, entweder nachdem die Oberfläche des Substrats (1) ganzflächig dotiert und/oder mit einer Aluminium mindestens als Hauptbestandteil enthaltenden Schicht (2, 6, 11) und gegebenenfalls einer Siliciumschicht (7) versehen worden ist, durch Tempern, oder nachdem die Oberfläche des Substrats (1) selektiv dotiert worden ist, durch Wegätzen der dabei nicht dotierten Bereiche der Oberfläche des Substrats (1) erzeugt werden, und daß die Schicht (5) nach dem Härten abgeschliffen wird, bis die Spitzen der Erhebungen freiliegen.

9. Verfahren nach Anspruch 8,
dadurch gekennzeichnet,
daß das Siliciumsubstrat (1) oberflächlich mit Bor dotiert, mit einer dünnen Aluminiumschicht (2) bedeckt wird und daraufhin bei ungefähr 350°C getempert wird, wobei Aluminiumzacken aus dem Substrat herauswachsen, und daß die Aluminiumzacken und die Aluminiumschicht (2) unter Bildung von Aluminiumoxidzacken (3) bzw. einer Aluminiumoxidschicht (4) anodisch oxidiert werden.

10. Verfahren nach Anspruch 9,
dadurch gekennzeichnet,
daß eine Oberflächenkonzentration an Bor von $10^{18}$ bis $10^{20}$/cm$^3$ eingestellt wird, daß die Aluminiumschicht (2) zwischen etwa 100 und etwa 1000 nm dick gemacht wird und daß die Höhe der Aluminiumzacken mittels der Dauer des Tempervorgangs gesteuert wird.

11. Verfahren nach Anspruch 8,
dadurch gekennzeichnet,
daß das Siliciumsubstrat (1) unter Bildung einer dünnen Oberflächenschicht (17) festgelegter Dicke arsendotiert wird, daß auf die Oberflächenschicht (17) eine Schicht (18) aus einem isolierenden Material aufgebracht wird, daß eine festgelegte Anzahl von Schwerionen (19) in die Schicht (18) implantiert wird und anschließend die Schicht (18) im Bereich der gebildeten Schwerionenspuren (20) selektiv weggeätzt wird, daß durch die entstandenen Kanäle (21) hindurch die Oberflächenschicht (17) selektiv bordotiert wird, wobei direkt oder nach einer Hochtemperatur-Temperung P+-Gebiete erzeugt werden, und daß die Schicht (18) und das dann noch arsendotierte Material weggeätzt werden.

12. Verfahren nach Anspruch 11,
dadurch gekennzeichnet,
daß die Schicht (18) aus Polyimid gebildet wird.

13. Verfahren nach einem der Ansprüche 8 bis 12,
dadurch gekennzeichnet,
daß das Siliciumsubstrat (1) auf einer Unterlage aus Aluminium oder einer Aluminiumlegierung z. B. durch Kathodenzerstäubung aufgebracht wird.

14. Verfahren nach Anspruch 8,
dadurch gekennzeichnet,
daß auf das einkristalline Siliciumsubstrat (1) siliciumhaltiges Aluminium oder hintereinander Aluminium und Silicium in getrennten Verfahrensschritten aufgedampft werden, daß anschließend in einer Inertgasatmosphäre getempert und unter Bildung von regelmäßig über das Substrat verteilten Siliciumpyramiden (13) abgekühlt wird, wobei die Anzahl der Siliciumpyramiden mit der richtigen Höhe über die Siliciummenge und die Siliciumverteilung in dem aufgedampften Material und über die Temper- und Abkühldauer gesteuert wird, und daß schließlich durch Abätzen des aluminiumhaltigen Materials die Siliciumpyramiden (13) freigeätzt werden.

15. Verfahren nach Anspruch 14,
dadurch gekennzeichnet,
daß auf das Siliciumsubstrat (1) mit (100)-Orientierung eine Aluminiumschicht, darauf eine dünne Siliciumschicht, und darauf noch einmal eine Aluminiumschicht aufgedampft werden, wobei der Silicium-Anteil, bezogen auf die aufgedampfte Gesamtmenge bei 1 bis 2 Gew.-%, liegt, daß bei einer Temperatur zwischen ungefähr 400 und ungefähr 480°C ca. 1 Stunde lang getempert wird und daß innerhalb eines Zeitraums von 10 bis 30 Minuten abgekühlt wird.

## Claims

1. Magnetic disk showing a silicon substrate and a magnetic layer applied on the substrate and comprised of a binder, magnetic particles and an abrasion-resistant material,
characterized in that the abrasion-resistant material has the form of elevations (3, 13, 23) which protrude over the surface of the substrate (1), grow either out of the substrate direct or out of a layer firmly adhering to the substrate, and have a predetermined and uniform distribution.

2. Magnetic disk as claimed in claim 1,
characterized in that the elevations (3, 13, 23) have a surface density of $3 \times 10^5$ to $2 \times 10^6$ per $cm^2$.

3. Magnetic disk as claimed in claim 1 or 2,
characterized in that the silicon substrate (1) is monocrystalline, and the elevations (13) consist of silicon containing $5 \times 10^{18}$ aluminum atoms/$cm^3$, and that they are of pyramid shape.

4. Magnetic disk as claimed in claim 1 or 2,
characterized in that the silicon substrate (1) is deposited on a substrate, e.g. of aluminum or an aluminum alloy.

5. Magnetic disk as claimed in any one of claims 1, 2 or 4,
characterized in that the silicon substrate (1) is of low boron doping, and the silicon elevations (23) of high boron doping.

6. Magnetic disk as claimed in any one of claims 1, 2 or 4,
characterized in that on the silicon substrate (1) spike-shaped elevations (3) of aluminum oxide are formed and that the surface of the substrate (1) is furthermore covered with a layer (4) of aluminum oxide.

7. Magnetic disk as claimed in any one of claims 1 to 6,
characterized in that the surfaces of the elevations (3, 13, 23) are approximately coplanar with the surface of the magnetic layer.

8. Method of making a magnetic disk as claimed in any one of claims 1 to 7, where a silicon substrate is provided and a layer containing at least one binder and magnetic particles is deposited thereon,
characterized in that prior to the deposition of the layer (5) on the silicon substrate (1) and the elevations (3, 13, 23) the latter are produced in a predetermined uniform distribution, either after the surface of the substrate (1) has been blanket doped and/or provided with a layer (2, 6, 11) containing aluminum at least as main component and optionally with a silicon layer (7), by tempering or, after the surface of the substrate (1) has been selectively doped, by etching off the undoped regions of the surface of the substrate (1), and that the layer (5) is abraded after curing until the elevation peaks have been exposed.

9. Method as claimed in claim 8,
characterized in that the silicon substrate (1) is doped on its surface with boron, covered with a thin aluminum layer (2) and subsequently tempered at approximately 350°C, with aluminum spikes growing out of the substrate, and that the aluminum spikes and the aluminum layer (2) are anodically oxidized forming aluminum oxide spikes (3) or an aluminum oxide layer (4), respectively.

10. Method as claimed in claim 9,
characterized in that a boron surface concentration of $10^{18}$ to $10^{20}$/$cm^3$ is set, that the aluminum layer (2) is between approximately 100 and approximately 1000 nm thick, and that the height of the aluminum spikes is controlled through the duration of the tempering process.

11. Method as claimed in claim 8,
characterized in that the silicon substrate (1) is arsenic-doped forming a thin surface layer (17) of predetermined thickness, that onto the surface layer (17) a layer (18) of an insulating material is applied, that a predetermined number of heavy ions (19) is implanted in the layer (18), and that subsequently, the layer (18) in the area of the heavy ion tracks (20) is etched off selectively, that through the thus formed channels (21) the surface layer (17) is selectively boron-doped, with P+ regions being produced directly or after a high temperature tempering, and that the layer (18) and the still arsenic-doped material are etched off.

12. Method as claimed in claim 11,
characterized in that the layer (18) consists of polyimide.

13. Method as claimed in any one of claims 8 to 12,
characterized in that the silicon substrate (1) is applied on a substrate of aluminum or an aluminum alloy, e. g. by cathode sputtering.

14. Method as claimed in claim 8,
characterized in that onto the monocrystalline silicon substrate (1) silicon-containing aluminum or subsequently aluminum and silicon are vapor deposited in separate process steps, that subsequently tempering is effected in an inert gas atmosphere, followed by cooling where silicon pyramids (13) uniformly distributed over the substrate are formed, the number of silicon pyramids of the correct height being controlled by means of the silicon quantity and the silicon distribution in the vapor deposited material, and by the tempering and cooling duration, and that finally the silicon pyramids (13) are exposed by etching off the aluminum containing material.

15. Method as claimed in claim 14, characterized in that onto the silicon substrate (1) with (100) orientation an aluminum layer followed by a thin silicon layer and again followed by an aluminum layer is vapor deposited, the silicon portion referring to the vapor deposited overall quantity being about 1 to 2 percent by weight, that tempering is effected at a temperature between approximately 400 and approximately 480°C for about 1 hour, and that cooling is effected within 10 to 30 minutes.

**Revendications**

1. Disque magnétique, qui comporte un substrat en silicium et une couche magnétique déposée sur ce substrat et constituée par un liant, des particules magnétiques et un matériau résistant à l'usure par frottement, caractérisé en ce que le matériau résistant à l'usure par frottement possède la forme d'élévations (3, 13, 23), qui font saillie sur la surface supérieure du substrat (1), ressortent directement à partir du substrat ou à partir d'une couche adhérant fermement au substrat, et possèdent une distribution uniforme fixe.

2. Disque magnétique selon la revendication 1, caractérisé en ce que les élévations (3, 13, 23) sont présentes en une densité superficielle comprise entre $3 \times 10^5$ et $2 \times 10^6$ par cm$^2$.

3. Disque magnétique selon la revendication 1 ou 2, caractérisé en ce que le substrat en silicium (1) est monocristallin et que les élévations (13) sont constituées par du silicium, qui contient $5 \times 10^{18}$ atomes d'aluminium/cm$^3$, et possèdent la forme de pyramides.

4. Disque magnétique selon la revendication 1 ou 2, caractérisé en ce que le substrat en silicium (1) repose sur un support constitué par exemple par de l'aluminium ou un alliage d'aluminium.

5. Disque magnétique selon l'une des revendications 1, 2 ou 4, caractérisé en ce que le substrat en silicium (1) est faiblement dopé par du bore et que les élévations (23) constituées par du silicium sont fortement dopées par du bore.

6. Disque magnétique selon l'une des revendications 1, 2 ou 4, caractérisé par le fait que des élévations en forme de pointes (3) en oxyde d'aluminium sont formées sur le substrat en silicium, et que la surface supérieure du substrat (1) est recouverte partout ailleurs d'une couche (4) d'oxyde d'aluminium.

7. Disque magnétique selon l'une des revendications 1 à 6, caractérisé en ce que les surfaces supérieures des élévations (3, 13, 23) sont approximativement coplanaires à la surface supérieure de la couche magnétique.

8. Procédé pour fabriquer un disque magnétique selon l'une des revendications 1 à 7, selon lequel on prévoit un substrat en silicium et on dépose sur ce dernier une couche contenant au moins un liant et des particules magnétiques, caractérisé en ce qu'avant le dépôt de la couche (5) sur le substrat en silicium (1) et sur les élévations (3, 13, 23), on forme ces dernières selon une distribution uniforme fixée, soit par recuit après que la surface supérieure du substrat (1) ait été entièrement dopée et/ou ait été munie d'une couche (2, 6, 11) contenant de l'aluminium au moins comme constituant principal, et éventuellement d'une couche de silicium (7), soit, après que la surface supérieure du substrat (1) ait été dopée de façon sélective, par élimination par corrosion des zones alors non dopées de la surface supérieure du substrat (1), et qu'on polit la couche (5) après qu'elle a durci, jusqu'à ce que les pointes des élévations soient à nu.

9. Procédé selon la revendication 8, caractérisé en ce qu'on dope la surface supérieure du substrat en silicium (1) avec du bore, qu'on recouvre le substrat avec une couche mince d'aluminium (2) et qu'ensuite on lui fait subir un recuit à environ 350°C, auquel cas les pointes en aluminium ressortent du substrat, et qu'on fait subir une oxydation anodique aux pointes en aluminium et à la couche d'aluminium (2) moyennant la formation de pointes d'oxyde d'aluminium (3) ou d'une couche d'oxyde d'aluminium (4).

10. Procédé selon la revendication 9, caractérisé en ce qu'on règle une teneur superficielle en bore comprise entre $10^{18}$ et $10^{20}$/cm$^3$, qu'on donne à la couche d'aluminium (2) une épaisseur comprise entre environ 100 et environ 1000 nm et qu'on règle la hauteur des pointes en aluminium au moyen de la durée de l'opération de recuit.

11. Procédé selon la revendication 8, caractérisé en ce qu'on dope le substrat en silicium (1) par de l'arsenic en formant une mince couche superficielle (17) possédant une épaisseur fixe, qu'on dépose sur la couche superficielle (17) une couche (18) réalisée en un matériau isolant, qu'on implante un nombre fixe d'ions lourds (19) dans la couche (18) et qu'on élimine ensuite de façon sélective par corrosion la couche (18) dans la région des traces formées (20) d'ions lourds, qu'on dope de façon sélective par du bore la couche superficielle (17) au moyen des canaux (21) obtenus, ce qui conduit à la formation de régions de type P$^+$ directement ou après un recuit à haute température, et qu'on élimine par corrosion la couche (18) et le matériau encore dopé par de l'arsenic.

12. Procédé selon la revendication 11, caractérisé en ce qu'on réalise la couche (18) en polyimide.

13. Procédé selon l'une des revendications 8 à 12, caractérisé en ce qu'on dépose le substrat en silicium (1) sur un support en aluminium ou en un alliage d'aluminium, par exemple par pulvérisation cathodique.

14. Procédé selon la revendication 8, caractérisé en ce qu'on dépose par évaporation de l'aluminium contenant du silicium ou successivement de l'aluminium et du silicium sur le substrat en silicium monocristallin (1), selon des étapes opératoires séparées, qu'ensuite on exécute un recuit dans une atmosphère de gaz inerte et qu'on met en oeuvre un refroidissement moyennant la formation de pyramides de silicium (13) répartie de façon uniforme dans le substrat, le nombre des pyramides de silicium possédant la hauteur correcte étant réglé en fonction de la quantité de silicium et de la distribution du silicium dans le matériau déposé par évaporation et en fonction des durées de recuit et de refroidissement, et qu'enfin on met à nu les pyramides de silicium (13) par élimination par corrosion du matériau contenant l'aluminium.

15. Procédé selon la revendication 14, caractérisé en ce qu'on dépose par évaporation une couche d'aluminium d orientation (100) sur le substrat en silicium (1), une mince couche de silicium sur cette couche d'aluminium et encore une fois une couche d'aluminium sur cette dernière couche, le pourcentage de silicium, rapporté à la quantité totale déposée par évaporation se situant entre 1 et 2 % en poids, qu'on effectue un recuit pendant une durée d'environ 1 heure à une température comprise entre environ 400 et environ 480°C et qu'on met en oeuvre un refroidissement pendant un intervalle de temps de 10 à 30 minutes.

FIG. 1A

FIG. 1B

FIG. 1C

FIG. 1D

FIG. 2A

FIG. 2B

FIG. 2C

FIG. 2D

FIG. 3A

FIG. 3 B

FIG. 3C

FIG. 3D

FIG. 3E

FIG. 4 A

FIG. 4 B

FIG. 4C

FIG. 4D

FIG. 4 E

FIG. 4 F